(19) Europäisches Patentamt
European Patent Office
Office européen des brevets

(11) **EP 1 862 791 B1**

(12) **FASCICULE DE BREVET EUROPEEN**

(45) Date de publication et mention
de la délivrance du brevet:
**20.02.2013 Bulletin 2013/08**

(51) Int Cl.:
*G01N 15/08* (2006.01)    *B01D 65/10* (2006.01)
*G01M 3/20* (2006.01)

(21) Numéro de dépôt: **07108866.0**

(22) Date de dépôt: **24.05.2007**

(54) **Procédé de contrôle ou de détermination des caractéristiques d'une membrane d'ultrafiltration ou microfiltration**

Verfahren zur Steuerung oder Bestimmung der Charakteristika einer Ultrafiltrations- oder Mikrofiltrationsmembran

Method of checking or determining the characteristics of an ultrafiltration or microfiltration membrane

(84) Etats contractants désignés:
**ES FR PL**

(30) Priorité: **29.05.2006 FR 0604761**

(43) Date de publication de la demande:
**05.12.2007 Bulletin 2007/49**

(73) Titulaires:
• **UNIVERSITE PAUL CEZANNE AIX-MARSEILLE III**
**13628 Aix en Provence Cedex 1 (FR)**
• **SAUR**
**78280 Guyancourt (FR)**

(72) Inventeur: **Moulin, Philippe**
**13013, MARSEILLE (FR)**

(74) Mandataire: **Domange, Maxime et al**
**Cabinet Beau de Lomenie**
**232, avenue du Prado**
**13295 Marseille Cedex 08 (FR)**

(56) Documents cités:
WO-A-2006/026011    SU-A1- 623 140
US-A1- 2003 168 408

• **DATABASE EMBASE [Online] ELSEVIER SCIENCE PUBLISHERS, AMSTERDAM, NL; 1997, FAUCONNIER N ET AL: "Thiolation of maghemite nanoparticles by dimercaptosuccinic acid" XP002417534 Database accession no. EMB-1997378302 & JOURNAL OF COLLOID AND INTERFACE SCIENCE 1997 UNITED STATES, [Online] vol. 194, no. 2, 1997, pages 427-433, ISSN: 0021-9797 Extrait de l'Internet: URL:http://www.sciencedirect.com/science?_ob=ArticleListURL&_method=list&_ArticleListID=531832672&_sort=d&view=c&_acct=C000049 880&_version=1&_urlVersion=0&_userid=98776 6&md5=84f6409347103db45dc9ad72b7ba3bde>[extrait le 2007-01-29]**
• **JOLIVET: "Synthesis of iron oxide-based magnetic nanomaterials and composites" COMPTES RENDUS CHIMIE, vol. 5, 3 juin 2002 (2002-06-03), - 9 octobre 2002 (2002-10-09) pages 659-664, XP002417532**

**Description**

La présente invention concerne le domaine de la filtration membranaire. Plus particulièrement la présente invention concerne un procédé de contrôle des caractéristiques d'une membrane de microfiltration ou ultrafiltration, notamment pour la détection de fuite ou d'un défaut de fonctionnement d'une membrane de filtration membranaire et, plus particulièrement encore, un procédé de détermination du seuil de coupure d'une dite membrane.

Actuellement, lorsqu'une fuite ou plus généralement un défaut de fonctionnement d'une membrane de filtration membranaire apparaît, il est nécessaire de nettoyer la membrane, de l'isoler, de démonter le module et de faire un test à l'air. Ce test consiste à injecter de l'air à l'entrée du module, la sortie étant fermée. Et, une détection d'air par bullage dans le perméat permet de savoir si le module est défectueux c'est à dire si une ou plusieurs fibres creuses constitutives du module sont défectueuses et/ou cassées.

Ce mode de détection des fuites nécessite obligatoirement d'isoler et de démonter le module et d'avoir un appareillage spécifique pour injecter de l'air.

Un premier but de la présente invention est donc de fournir une nouvelle méthode détection des fuites et, plus généralement, des défauts d'une membrane de microfiltration ou d'ultrafiltration, notamment plus fiable et plus simple à mettre en oeuvre, permettant notamment une détection in situ sans démontage du module.

Le seuil de coupure est une des caractéristiques les plus importantes pour le choix d'une membrane donnée en vue d'une séparation souhaitée lorsque la séparation est basée sur un effet stérique.

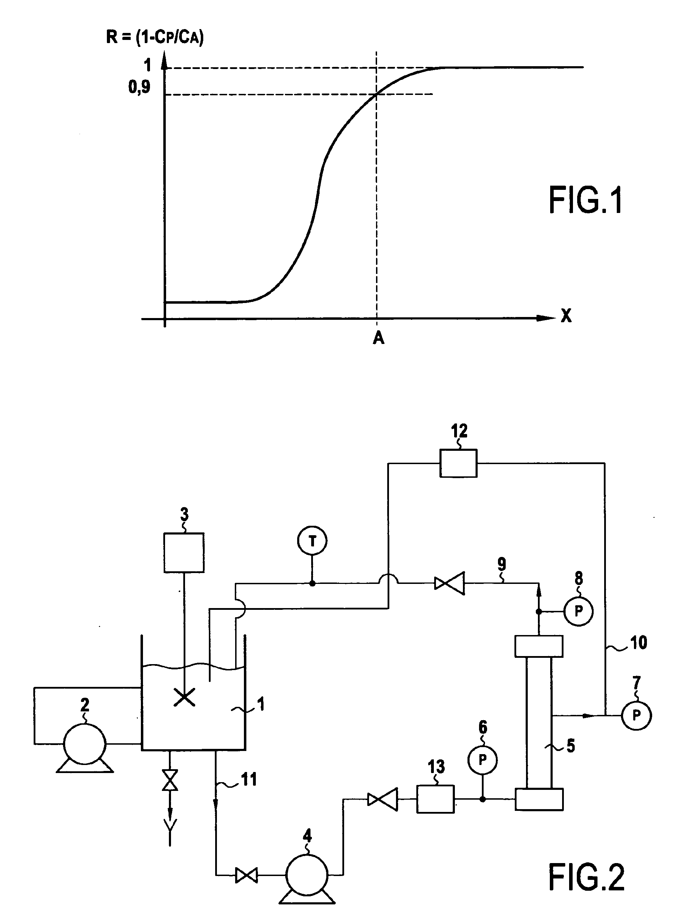

Le seuil de coupure indique plus précisément la taille à partir de laquelle les molécules, les micro-organismes ou les particules sont retenus par la membrane et, plus précisément encore, le seuil de coupure est défini par la taille ou, quelquefois, la masse molaire des molécules correspondant à un taux de rétention de 90%. Le seuil de coupure est défini par chaque fabricant de membranes, lesquels utilisent des méthodes propres pour sa détermination, notamment en ce qui concerne le type de molécules, notamment de polymères utilisés pour cette détermination. On utilise classiquement des polymères de dextrane, de PEG (polyéthylène glycol) ou de latex. Il a été envisagé d'utiliser des protéines pour la caractérisation des seuils de coupure de membranes, mais celles-ci entraînent des risques de colmatage de la membrane. On mesure, pour une force motrice donnée, à savoir une différence de pression dite pression transmembranaire, la concentration de ladite espèce en amont (Ca) et en aval (concentration du perméat Cp) de la membrane. Ainsi, pour différentes solutions contenant différentes tailles ou poids moléculaires de la molécule choisie, on trace le taux de rétention en fonction des tailles ou masses molaires des espèces ou solution, et on obtient une figure, comme représentée figure 1. Ainsi pour des espèces de faible masse moléculaire ou de faible taille, l'ensemble des espèces passe au travers de la membrane et la concentration amont est égale à la concentration en aval, le taux de rétention est alors nul. A l'opposé, lorsque la taille ou la masse molaire des substances est très grande, rien ne passe à travers la membrane et la concentration en aval est nulle, le taux de rétention étant alors égal à 100%.

Le seuil de coupure est exprimé en général en micron pour les membranes de microfiltration et en micron ou en dalton pour les membranes d'ultrafiltration, le dalton étant la masse molaire de l'isotope de l'hydrogène, soit 1 Da = 1 g/mole.

On comprend qu'en fonction des espèces moléculaires utilisées, des pressions appliquées pour effectuer la filtration et, notamment, en fonction de l'aptitude à la déformation de la molécule, notamment du polymère concerné, on obtient des valeurs de seuil de coupure variables selon les conditions appliquées pour une même membrane.

Sous certaines conditions de pression, les composés utilisés, notamment pour les polymères à longue chaîne moléculaire, peuvent se trouver soit sous forme de chaîne longue sensiblement linéaire, soit sous forme de chaîne repliée sur elle-même, et donc varier de taille.

Il résulte de la diversité des méthodes mises en oeuvre pour déterminer le seuil de coupure et de la diversité des résultats obtenus selon les conditions d'application, que certaines membranes sont annoncées comme étant plus sélectives que d'autres alors que leur seuil de coupure est plus grand. Ainsi une membrane d'une société X, annoncée avec un seuil de coupure de 5 000 Da, pourra présenter, pour un même produit donné, une rétention plus grande qu'une membrane d'une autre société avec un seuil de coupure annoncé inférieur. Pour une même membrane il est possible de démontrer qu'en fonction des produits utilisés, ou même pour un même produit en fonction des conditions d'application de la méthode de détermination du seuil de coupure, on arrive à des valeurs de seuils de coupure complètement différentes de celui-ci

Un autre but de la présente invention est donc de fournir une nouvelle méthode de caractérisation du seuil de coupure des membranes de microfiltration et d'ultrafiltration, qui permette d'obtenir une valeur de seuil de coupure intrinsèque à la membrane de manière fiable et répétitive, pour des membranes dont le seuil de coupure est, de préférence, de 1 à 50 nm, plus particulièrement de 5 à 25 nm.

La présente invention consiste essentiellement à utiliser des solutions de particules minérales magnétiques de 1 à 100 nm, calibrées à une valeur de $d_{50}$ de 2 à 50 nm, de préférence à base d'oxyde de fer, notamment des particules d'oxydes ferriques et de préférence encore des particules de maghémite comme soluté étalon selon la revendication 1, et de mesurer la rétention d'une membrane de filtration vis-à-vis dudit soluté étalon, en mesurant la concentration de ses particules en amont et en aval de la membrane, de préférence par mesure de la susceptibilité magnétique de(s)dite(s) suspension(s), sous réserve d'une caractéristique de monodispersité suffisante telle que définie ci-après.

Les particules selon l'invention sont des nano particules magnétiques constituées, de préférence majoritairement, d'oxyde de fer et comprenant éventuellement d'autres métaux, notamment des particules de maghémite, de structure dite spinelle à base de $\gamma$-$F_2O_3$, décrites notamment par Jolivet et al. dans C.R. Chimie 5 (2002 659-664).

Les inventeurs ont préparé différents lots de particules magnétiques minérales à base d'oxyde de fer, notamment des particules d'oxyde ferrique et, plus particulièrement, des particules de maghémite, de dimensions calibrées comme défini ci-après, de différentes tailles et dont les tailles sont cohérentes avec les valeurs de seuil de coupure de référence des membranes de microfiltration et ultrafiltration (de 1 à 100 nm, plus particulièrement de 1 à 50 nm) et qui, du fait de leur fabrication, ont pu être obtenus sous forme de suspension mono dispersée comme il sera défini ci-après.

Les avantages de ces particules sont de :

- présenter une stabilité dimensionnelle et, notamment,

- être indéformables à la pression, et

- ne pas, sous certaines conditions, s'agréger entre elles sous forme d'agrégats,

- pouvoir être facilement analysables ou détectables in situ, et

- pouvoir être fabriquées en quantité importante et avec des tailles précises, et enfin

- ne pas connaître d'adsorption préférentielle à la surface de la membrane, comme dans le cas de composés organiques ou vivants.

Il est donc possible d'obtenir des suspensions de particules, notamment de maghémite, avec des tailles calibrées et variables selon les lots.

Plus précisément, la présente invention fournit un procédé de contrôle ou de détermination des caractéristiques d'une membrane de microfiltration ou ultrafiltration, caractérisé en ce que l'on fait passer à travers ladite membrane au moins un lot d'une suspension de nano particules minérales magnétiques, de préférence des particules à base d'oxyde de fer, notamment d'oxyde ferrique, de concentration donnée et dont la dimension des particules est de 1 à 100 nm et est calibrée à un calibre donné de 2 à 50 nm, de préférence encore un calibre de 5 à 25 nm, ledit calibre étant la valeur $d_{50}$ de dimension de particules pour laquelle 50% en volume desdites particules ont une dimension inférieure ou égale à ladite valeur $d_{50}$, et dont au moins 60% en volume desdites particules ont une dimension comprise dans la fourchette $dp_m \pm \sigma$, $dp_m$ représentant la valeur moyenne des dimensions des particules dudit lot et $\sigma$ l'écart-type.

Le lot de particules est donc calibré de manière à respecter une valeur de $d_{50}$ (ou calibre) donnée de 2 à 50 nm.

Ces particules minérales magnétiques forment des suspensions stabilisées. On entend ici par "suspensions stabilisées" que la taille des particules minérales magnétiques n'évolue pas avec le temps et selon les conditions de mise en oeuvre, notamment les conditions de pression, et ne présentent aucune affinité physico-chimique avec la dite membrane, de sorte que notamment lesdites particules ne s'agrègent pas, ne coagulent ou ne floculent pas entre elles.

Pour ce faire, ladite suspension peut comprendre un agent stabilisant, permettant d'éviter l'agrégation desdites particules et/ou d'empêcher toute affinité avec la membrane.

Les suspensions de particules, telles que définies ci-dessus en terme de dimension, sont également appelées ci-après "suspensions calibrées mono dispersées".

La précision du procédé selon l'invention sera d'autant plus grande que ladite proportion de particules de dimension comprise dans la fourchette $dp_m \pm \sigma$, sera élevée.

En pratique, on établit, pour un lot de particules donné, une courbe de pourcentage en volume de particules en fonction du diamètre de particules d'où l'on déduit (i) une courbe du pourcentage cumulé en fonction du diamètre d'une part. La courbe du pourcentage cumulé en fonction du diamètre permet de déterminer les valeurs de $d_{50}$, (ii) la valeur du diamètre moyen de particule ($dp_m$), l'écart type ($\sigma$) ainsi que le pourcentage de particules ayant une dimension dans la fourchette $dp_m \pm \sigma$, cette dernière correspondant à la différence du pourcentage cumulé entre les valeurs $dp_m + \sigma$ et $dp_m - \sigma$ d'autre part.

Le diamètre moyen de particule et l'écart-type se calculent respectivement à partir des formules suivantes :

$$\text{Valeur moyenne : } dp_m = \Sigma \ Ni \ di \ / \ \Sigma \ Ni$$

$$\text{Ecart type : } \sigma = (\Sigma \ Ni \ (di\text{-}dp_m)^2 \ / \ \Sigma \ Ni)^{1/2}$$

Ni = volume de particules de dimension di

Dans un mode préféré de réalisation du procédé selon l'invention, on mesure la concentration desdites particules du ou desdits lots en aval de ladite membrane, de préférence en amont et en aval, et, de préférence encore, on mesure ladite concentration par mesure de la susceptibilité magnétique des suspensions.

La susceptibilité magnétique d'un matériau exprime la sensibilité du matériau à la magnétisation et représente sensiblement le ratio des intensités aimantation induite/champ magnétique inducteur lorsque ledit matériau est placé dans un champ magnétique de faible intensité, notamment inférieur à 1 mTesla.

La susceptibilité magnétique d'une suspension présente l'avantage d'être proportionnelle à la concentration en matériaux magnétiques qu'elle enferme. Cette susceptibilité magnétique se mesure à l'aide d'appareils de mesure connus de l'homme de l'art. Par rapport aux autres techniques de détermination de concentration, comme la mesure de matière sèche ou le compteur de particules, elle présente :

- une plus grande précision et rapidité de mesure de la concentration,

- la mise en oeuvre d'un volume de prélèvement plus faible,

- la possibilité d'une détection en continu, et

- la mise en oeuvre d'un matériel d'analyse transportable sur site et d'un coût acceptable.

Plus particulièrement, lesdites suspensions de particules minérales magnétiques, de préférence de particules à base d'oxyde de fer, sont des suspensions aqueuses stabilisées et la concentration en dites particules, notamment particules de maghémite, dans ces suspensions est de 0.1 à 10 g/l.

Dans un mode préféré de réalisation, on met en oeuvre des lots de suspension de particules de maghémite.

On entend ici par "suspension stabilisée", le fait que, non seulement la taille des particules de la suspension n'évolue pas avec le temps et selon les conditions de mise en oeuvre, notamment les conditions de pression, mais que, pour ce faire, ladite suspension de particules, notamment de maghémite, peut comprendre un agent stabilisant permettant d'éviter l'agrégation desdites particules et ne présentant aucune affinité avec la membrane. De tels agents stabilisants sont connus de l'homme de l'art et sont généralement des composés comme, le DMSA (acide 2,3-dimercaptosuccinique), des citrates, décrits notamment par Fauconnier et al. dans J. of Colloid and interface science 194 (1997) 427-433.

Avantageusement, une mesure des dites concentrations en aval et en amont de la membrane sont prises en compte après au moins 3 mesures identiques successives de préférence espacées d'au moins 10 minutes de flux de perméat.

Avantageusement encore, avant d'effectuer une nouvelle mesure de concentration en aval de la membrane et, de préférence après nettoyage de la membrane par lavage chimique ou rétrolavage à l'eau, on envoie une solution de solvant, généralement de l'eau, à travers ladite membrane et on effectue une mesure de la perméabilité de la membrane. Ceci permet de comparer la perméabilité à une valeur initiale de la perméabilité dont la mesure a été effectuée avant l'envoi de suspension de maghémite à travers la membrane pour vérifier que la suspension de maghémite n'a pas colmaté la membrane.

On entend ici par "perméabilité", le facteur de proportionnalité du flux de perméat ($1/h.m^2$) en fonction de la pression membranaire, par exemple exprimée en bar.

Selon une première variante de réalisation, ladite suspension de particules, notamment de maghémite, est envoyée à travers la membrane, poussée par un gaz, de préférence de l'azote ou de l'air, sans utiliser de pompe et, de préférence lesdits perméats et rétentats de suspension de particules, notamment de maghémite, ne sont pas recyclés au cours des différentes mesures sur un même lot.

Cette variante de réalisation permet d'écarter tout risque de modification de la granulométrie des lots de particules, notamment de maghémite.

Toutefois, compte tenu de la stabilité de ces particules, il est possible de mettre en oeuvre une deuxième variante de réalisation dans laquelle :

- lesdites suspensions de particules, notamment de maghémite, sont mises en circulation par une ou des pompes, et

- lesdits perméats et rétentats de suspensions de particules, notamment de maghémite, sont recyclés au cours des différentes mesures sur un même lot.

Dans un mode préféré de réalisation, la vitesse de circulation desdites suspensions de particules, notamment de maghémite, est telle que le flux de perméat de suspension de particules, notamment de maghémite, doit être compris entre la valeur du flux de perméat mesuré avec le solvant aqueux seul et 70% de cette valeur (soit 70 à 100% de cette valeur).

Dans un mode préféré de réalisation, on effectue une filtration membranaire en mode tangentiel. Ceci permet de limiter l'accumulation de matière à la surface de la membrane avec le temps et le colmatage de celle-ci.

Selon un aspect de la présente invention, l'utilisation des suspensions des particules minérales magnétiques stabilisée, notamment des suspensions de particules de maghémite, peut être mise en oeuvre pour la mesure de l'intégrité d'une membrane de filtration, notamment dont le seuil de coupure est de préférence de 1 à 50 nm, plus particulièrement de 5 à 25 nm. En effet, lors de l'utilisation des membranes de filtration, il est possible et même fréquent qu'un défaut ou qu'une casse apparaisse, modifiant les caractéristiques de séparation. En injectant dans le module de membrane de filtration, des suspensions calibrées de particules, notamment de maghémite, si le calibre des particules est bien choisi et, notamment, supérieur au seuil de coupure, la détection et l'analyse de la concentration en particules, notamment de maghémite dans le perméat permet d'estimer les dommages causés aux membranes.

Selon un autre aspect du procédé selon l'invention, on détermine le seuil de coupure d'une dite membrane, notamment dont le seuil de coupure est de préférence de 1 à 50 nm, plus particulièrement de 5 à 25 nm, en effectuant une série de mesures de concentrations en aval et en amont de la membrane, notamment dans le perméat de dites suspensions en aval de la membrane, à température, pression transmembranaire et vitesse de circulation constantes, sur des lots de suspension de particules, notamment de maghémite, de différents calibres, de préférence de calibres régulièrement espacés entre 1/2 x n et 10 x n, n étant la dimension moyenne estimée des pores de la membrane, et on établit une courbe du taux de rétention R = 1-Cp/Ca en fonction de la valeur desdits calibres, avec Cp = concentration du perméat en aval de la membrane et Ca = concentration de particules, notamment de maghémite, en amont de la membrane.

Dans un mode préféré de réalisation, le calibre des particules des différents lots de suspension de particules, notamment de maghémite, doit permettre d'obtenir au moins 5 couples de points (calibre/taux de rétention) dans une plage de taux de rétention de 60 à 95%, et de préférence on détermine le seuil de coupure de ladite membrane comme étant la valeur du calibre ($d_{50}$) dudit lot de suspension de particules, notamment de maghémite correspondant à R = 0,9.

La présente invention a donc également pour objet un procédé dans lequel on détecte une fuite ou un défaut de fonctionnement d'une membrane de filtration membranaire, en faisant passer à travers ladite membrane au moins un lot de suspensions de particules, notamment de maghémite, de dite dimension calibrée, dont ledit calibre est supérieur au seuil de coupure de ladite membrane, ledit seuil de coupure étant de préférence de 1 à 50 nm, plus particulièrement de 5 à 25 nm, de préférence déterminé précédemment par une méthode selon l'invention, et on mesure la concentration desdites particules du ou desdits lots en aval de ladite membrane.

Plus particulièrement, dans le procédé selon l'invention, lesdites particules sont des particules de maghémite de 1 à 100 nm, lesdits lots de particules sont calibrés à des valeurs de d50 de 5 à 25 nm et la concentration en maghémite dans lesdites suspensions de particules est de 0,1 à 10 g/l.

D'autres caractéristiques et avantages de la présente invention apparaîtront à la lumière de la description détaillée qui va suivre, faite en référence aux dessins annexés sur lesquels :

la figure 1 représente une courbe type de détermination de taux de rétention, dans laquelle R représente le taux de rétention et l'abscisse (X) la taille des molécules avec A le seuil de coupure,

la figure 2 représente le schéma d'une installation de filtration membranaire pour la mise en oeuvre d'un procédé selon l'invention,

les figures 3 à 6 représentent des courbes de répartition des tailles des particules de maghémite de deux lots de suspensions calibrées mono dispersées différentes, les figures 3 et 5 indiquant le pourcentage volumique en fonction du diamètre des particules et les figures 4 et 6 indiquant les pourcentages cumulés en fonction du diamètre des particules, les figures 3 et 4 se référant à un premier lot et les figures 5 et 6 à un deuxième lot.

A- Installation et procédé de détermination de seuil de coupure

On utilise une installation d'un pilote classique de filtration membranaire fonctionnant en mode tangentiel, comme décrit sur la figure 2. Le bac d'alimentation 1 contient un lot de suspension de particules de maghémite calibrée et mono dispersée, à savoir comprenant une proportion en volume d'au moins 60% de particules de dimension comprise dans une gamme $dp_m \pm \sigma$, préparées comme décrit ci-après (B).

Ce bac d'alimentation est thermostaté 2 de manière à maintenir constante la température, de préférence à 20°C, et agité 3 de manière à homogénéiser le volume de suspension, à la fois en terme de température et de concentration en particules de maghémite.

La concentration de la suspension en particules de maghémite doit être suffisamment importante pour être détectable, mais pas trop importante de manière à ne pas colmater ou trop colmater la membrane, d'une valeur de 0.1 à 10 g/l. Le flux de perméat ne devra pas être inférieur à 70% du flux de perméat mesuré avec le solvant seul, c'est-à-dire généralement l'eau. En effet, si le flux de perméat est trop différent du flux de l'eau, il y a un risque de colmatage trop important de la membrane avec modification de sa porosité.

Le volume de suspension dans le bac 1 est suffisamment important pour que la concentration en particules de maghémite en amont de la membrane soit constante. De préférence ce volume de suspension dans le bac 1, est supérieur ou égal à 20 fois le volume de l'installation, à savoir le volume du module membranaire 5 additionné du volume des canalisations de l'installation 9-12. En effet, si le volume de la membrane est très grand par rapport au volume du bac et des canalisations, la matière retenue par la membrane peut influencer sur la quantité de matière globale et donc sur la concentration.

La suspension en particules de maghémite est mise en mouvement par l'intermédiaire d'une pompe volumétrique 4 ou centrifuge, permettant de limiter au maximum le cisaillement dans la pompe. Cette pompe 4 doit assurer une circulation tangentielle au voisinage de la membrane de manière à ce que la vitesse de circulation soit suffisamment élevée, tout en maîtrisant la perte de charge entre l'entrée et la sortie du module membranaire. Si la perte de charge entre l'entrée et la sortie du module membranaire est trop grande, la membrane ne travaille pas de manière homogène.

La vitesse de circulation tangentielle est comprise de préférence dans la plage préconisée par le fabricant de membranes, à savoir en général de 0,1 à 6 m/s. Il s'agit de la vitesse à laquelle le fluide circule au voisinage de la membrane.

La pression de sortie du rétentat 8 en sortie du module 5 doit être supérieure à la pression en sortie du perméat 7 et doit être la plus proche possible de la pression à l'entrée 6 du module, ceci afin d'éviter qu'un flux de matière ne revienne dans la membrane La pression transmembranaire, qui est égale à la différence entre, d'une part, la moyenne entre les pressions de sortie et d'entrée du module membranaire et, d'autre part, la pression du perméat, est fonction du procédé utilisé, à savoir ultrafiltration ou microfiltration, ainsi que de la nature et de la géométrie de la membrane.

On fonctionne à une pression transmembranaire adaptée au procédé retenu, de préférence la pression transmembranaire sera comprise entre 0 et 2 bars pour la microfiltration, et entre 0 et 6 bars pour l'ultrafiltration.

Avantageusement, la pression transmembranaire sera comprise entre 0,1 et 2 bar, de préférence de l'ordre de 0,5 bar pour des fibres creuses d'ultrafiltration et un seuil de coupure de 300 kDa et entre 0 et 6 bar de préférence de l'ordre de 4 bar pour des membranes tubulaires céramiques et un seuil de coupure de 300 kDa.

Durant toute l'expérience les paramètres de pression, de température et de vitesse de circulation sont maintenus constants. Le pH et la salinité devront également être constants.

Les perméat et rétentat sont recyclés 9 et 10 vers le bac d'alimentation.

Toutefois, de préférence, de façon à éviter de modifier la granulométrie des particules, on peut mettre en oeuvre un procédé dans lequel on ne fait pas de recyclage et on n'utilise pas de pompe de circulation. Le réservoir est alors mis sous pression et la suspension envoyée directement vers le module membranaire. Le perméat et le rétentat sont récupérés dans un bac pour une prochaine expérience. Cette configuration permet de ne pas utiliser de pompes à effet cisaillant sur la suspension. Toutefois, le volume du réservoir d'alimentation doit être suffisamment important pour atteindre des conditions stables en ce qui concerne les pressions et le débit de perméat.

Le module membranaire 5 doit être suffisamment représentatif de la membrane que l'on souhaite caractériser, à savoir constitué par :

- un tube monocanal pour les membranes céramiques tubulaires de surface de l'ordre de 50 à 100 $cm^2$,

- quelques fibres creuses de 10 à 100 cm de longueur, ou

- une surface plane de 50 à 100 $cm^2$.

On doit choisir une longueur de membrane suffisamment grande pour limiter les effets d'entrée-sortie causés par les embouts des modules et faire attention à la répartition du fluide en entrée pour les modules contenant des membranes planes selon les recommandations du fabricant. Si les longueurs des modules sont trop faibles, les entrées et sorties des modules perturbent l'écoulement, et donc le flux, à l'intérieur des modules de membranes.

Les membranes pourront être de nature organique ou minérale, de géométrie fibres creuses, tubulaires, planes ou spiralées. Les procédés considérés sont l'ultrafiltration et la microfiltration.

Toutes les 10 minutes, le débit de perméat est mesuré 12. A partir de 3 mesures successives de débits de perméat identiques, espacées de 10 minutes, on considère que le système est stable. Les concentrations de maghémite, en amont et en aval de la membrane dans le perméat, sont alors déterminées par mesure de la matière sèche ou de la susceptibilité magnétique, et le taux de rétention (en %) est calculé = (1-Concentration aval/concentration amont) * 100.

En l'espèce, la mesure de la susceptibilité magnétique est effectuée comme suit : un échantillon de quelques millilitres est prélevé en même temps en amont et en aval de la membrane et aussitôt placé dans un champs magnétique. La durée de la mesure (inférieure à 10 s) permet d'obtenir une réponse quasi immédiate des deux concentrations. On utilise des appareils de la société KAPPABRIDGE, notamment du type KAPPABRIDGE KLY-2.

Le pilote est ensuite rincé, la membrane est nettoyée. La perméabilité à l'eau de la membrane est calculée en mesurant l'évolution du flux de perméat en fonction de la pression transmembranaire et comparée à la valeur initiale pour vérifier que la suspension de maghémite n'a pas colmaté de manière irréversible la membrane.

Une autre suspension de particules de calibre différent est alors placée dans le bac d'alimentation et l'expérience est reproduite. Les conditions de température, pressions et vitesse de circulation sont reproduites de manière identique.

Le débitmètre 12 sert à mesurer le débit de perméat, c'est cette indication qui permet de dire que le fonctionnement est stabilisé lorsque sa valeur est stable. Cette mesure sert à vérifier également, comme il est dit plus haut, que la suspension ne colmate pas trop la membrane

On réalise autant d'expériences et de mesures que nécessaire pour tracer avec le plus de précision possible la courbe taux de rétention en fonction de la taille des suspensions de maghémite.

Une dizaine d'expériences et de mesures sont suffisantes. Le choix des calibres des particules des différentes suspensions doit permettre d'obtenir aussi bien des taux de rétention de 100% que de 0% et permettre d'obtenir environ 5 couples de points (calibre de la suspension, taux de rétention) dans une plage de taux de rétention allant de 60 à 95%. La précision concernant la détermination du seuil de coupure sera d'autant plus grande que le nombre d'expériences sera important.

Le seuil de coupure de la membrane est alors défini comme étant la taille de la suspension correspondant à 90% du taux de rétention.

B- Préparation de suspensions de maghémite

On décrit ci-après, un mode de préparation de l'eau de suspension calibrée de différents calibres donnés entre 2 et 15 nm conformément à VAYSSIERE et Al. J. Colloïd Interface SCI, 205, (1998) 205-212).

Les particules de maghémite sont formées à partir de magnétite $Fe_3O_4$. Les particules de magnétite sont très sensibles à l'oxydation et se transforme en maghémite par oxydation en milieu acide. La préparation des suspensions de particules de maghémite commence donc par la préparation de particules de magnétite. Les particules de magnétite $Fe_3O_4$ possèdent une structure spinelle inverse où les atomes de fer occupent des sites de coordination octaédrique et tétraédrique. Pour synthétiser des particules de magnétite, on co-précipite en solution aqueuse des ions métalliques $Fe^{2+}$ et $Fe^{3+}$. La cristallisation est quasiment immédiate à température ambiante.

On effectue donc ensuite une étape d'oxydation à l'acide perchlorique à pH entre 2 et 3. L'oxydation en milieu acide ne provoque pas un changement significatif de la taille des particules, celle-ci étant déterminée essentiellement par les conditions opératoires de la précipitation de particules de magnétite.

Plus précisément, on peut suivre le protocole expérimental suivant :

1- Préparation de particules de magnétite

On prépare une solution ferrique - ferreux dont la stoechiométrie $Fe^{2+}/Fe^{3+}$ = 0,5. Pour cela, on mélange par exemple :

- 30 mL de $FeCl_2$ à 2M, soit 11,93 g de $FeCl_2,4H_2O$ ($n_{Fe}^{2+}$ = 0,06 mol) dissout dans 30 mL de HCl molaire. On obtient une solution verte.

- 120 mL de $FeCl_3$ à 1M, soit 32,43 g de $FeCl_3, 6H_2O$ ($n_{Fe}^{3+}$ = 0,12 mol) dissout dans 120 mL de HCl molaire. Cette solution est marron clair.

La solution de mélange est ensuite ajoutée, gouttes à gouttes, à une solution tampon d'ammoniaque dont le pH et la force ionique sont constants tout au long de l'addition. Le pH est régulé grâce à une solution d'ammoniaque à 32%, et le nitrate de sodium maintient la force ionique.

Les conditions opératoires sont représentées dans le tableau 1 ci-après, en fonction de la taille des particules de maghémire.

Tableau 1 : Rayon des maghémites attendu suivant le pH et la quantité de nitrate de sodium

| pH | [NaNO$_3$] | m $_{NaNO3}$ | Taille attendue (en nm) |
|---|---|---|---|
| 12 | 3 mol.L$^{-1}$ | 254,9*(1+V$_{NH3}$) | 2 |
| 11 | 2,5 mol.L$^{-1}$ | 212,5*(1+V$_{NH3}$) | 4-5 |
| 10 | 2 mol.L$^{-1}$ | 169,9*(1+V$_{NH3}$) | 9 |
| 9,5 | 1 mol.L$^{-1}$ | 84,9*(1+V$_{NH3}$) | 10-11 |
| 8,5 | 0,5 mol.L$^{-1}$ | 42,5*(1+V$_{NH3}$) | 12-14 |

Il est important de mesurer le volume d'ammoniac (V$_{NH3}$) pour connaître le volume total de la solution, on peut ainsi en déduire la masse de nitrate de sodium à ajouter (m$_{NaNO3}$).

Pour les expériences dans lesquelles le pH est inférieur ou égal à 10, le volume d'ammoniaque ajouté est négligeable.

L'ajout de nitrate de sodium augmentant légèrement le pH, il se fait avant la régulation du pH.

Ensuite, on agite 1 heure et on laisser décanter le précipité sous agitation par aimant permanent. On enlève ensuite un maximum de surnageant (quasiment translucide) et on garde le dépôt de couleur noire de magnétite.

2- Préparation des particules de maghémite

On effectue ensuite une étape d'oxydation à l'acide perchlorique: Pour ce faire, on introduit 400 mL d'acide perchlorique à 3M et on laisse agiter 1 heure. Le solide décante ensuite sous l'agitation par aimant. On enlève alors un maximum de la solution surnageante de couleur jaune. On remet un même volume d'acide perchlorique, la durée d'agitation lors de cette étape étant d'une demi-heure. Après avoir retiré le surnageant, on sépare le solide par centrifugation. On obtient un solide noir très visqueux.

On rince le solide à l'eau et on le centrifuge à trois reprises.

Pour finir, on conserve le précipité dans de l'eau (environ 200 mL), le pH étant d'environ 2 à 2,5. Les suspensions sont concentrées et très stables.

La masse d'acide perchlorique est importante mais elle permet de s'assurer que la charge de surface de particules est maximale.

On obtient au final entre 5 et 15 g de solide.

La magnétite s'oxyde progressivement pour donner la maghémite par désorption progressive des ions Fe$^{2+}$.

On considère que l'oxydation par vieillissement est terminée lorsque on aura une teneur en.Fe2+ $\leq$ 2%. La durée de cette oxydation dépend de la taille du lot des particules concernées et donc des conditions opératoires de l'étape 1- ci-dessus.

Pour des particules de tailles 8 - 9 nm, l'oxydation est obtenue au bout d'environ 1 mois et demi.

Durant cette étape d'oxydation, on effectue à intervalle de temps régulier (toutes les semaines) un lavage à l'acide pour éliminer les ions qui se sont désorbés.

Pour savoir ensuite si l'étape de vieillissement est arrivée à son terme, on effectue un dosage potentiométrique, au cours duquel on dose les ions Fe$^{2+}$ et Fe$^{3+}$ présent dans la solution. Son principe est le suivant :

- On dose les ions Fe$^{2+}$ en solution par du dichromate, et

- On réduit à l'aide d'étain (SnCl$_2$) les ions Fe$^{3+}$ en ions Fe$^{2+}$ et on recommence le dosage au dichromate.

On a ainsi, grâce a la première expérience, la concentration en ions Fe$^{2+}$ et, grâce à la deuxième, la concentration totale en ions ferreux et ferriques.

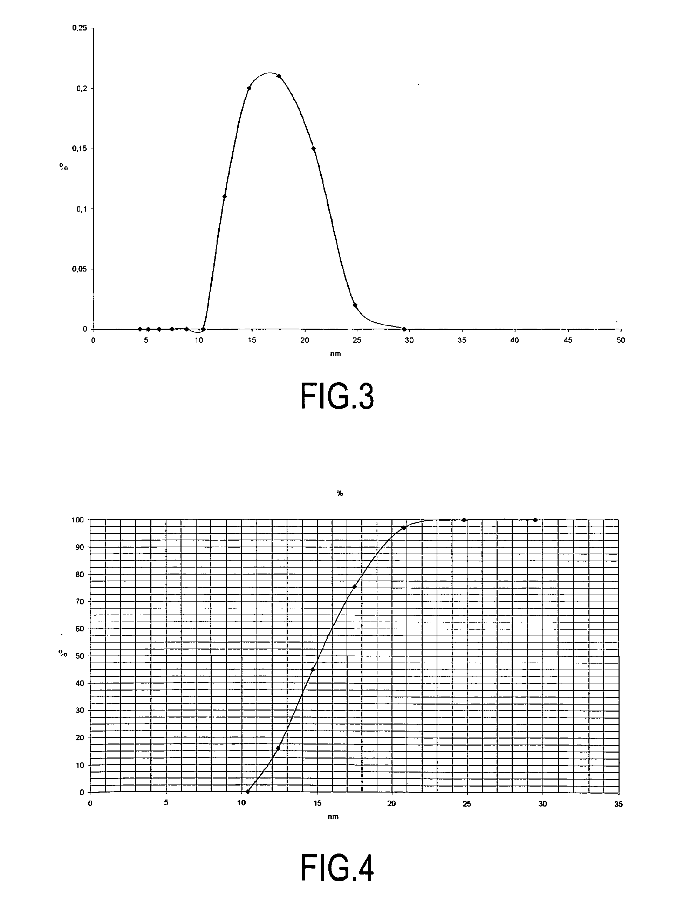

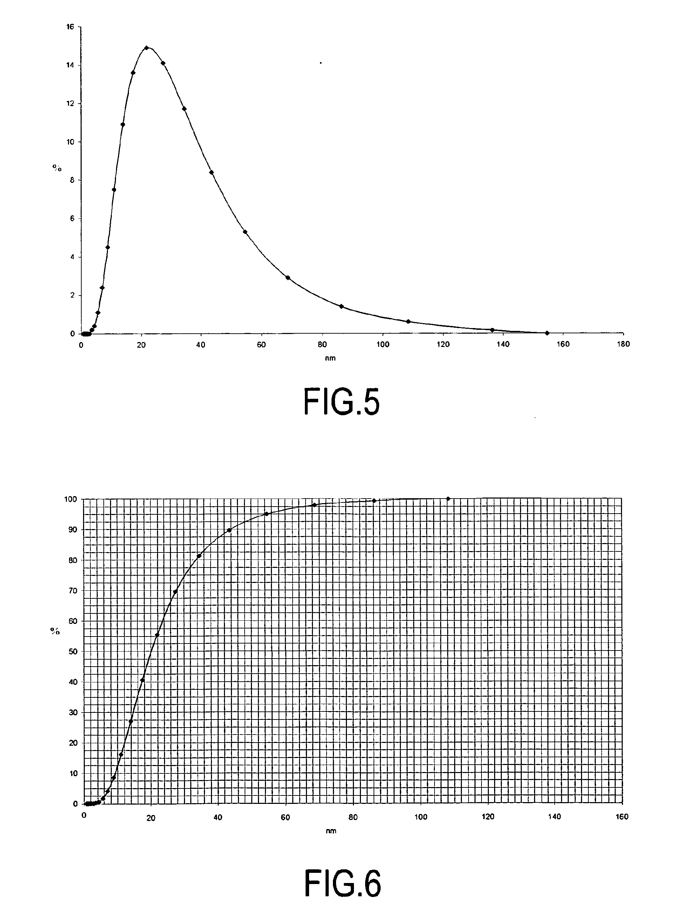

A titre illustratif, sur les figures 3 et 5, on a représenté une courbe de répartition du diamètre des différentes particules pour deux lots de particules, les valeurs en ordonnée étant la proportion en pourcentage volumique de particules aux différentes valeurs de dimension de particules mentionnées en abscisse. Les courbes selon les figures 3 et 5 peuvent être réalisées à l'aide d'un granulomètre laser, ici un granulomètre SEM120 équipé avec un laser (Omnichrome ion laser, 514 nm, 120mW; RTG-Sematech autocorrelator), et les pourcentages volumiques sont déduits des pourcentages d'intensité lumineuse à l'aide d'une courbe d'étalonnage.

A partir des figures 3 et 5, on peut établir les figures de pourcentages cumulés 4 et 6, qui permettent de déterminer le calibre d$_{50}$ ainsi que le pourcentage de particules de dimension dp$_m \pm \sigma$.

Ainsi, pour le premier lot (figures 3 et 4), on obtient $d_{50}$=15,1 nm, $dp_m$=16,8 nm, $\sigma$=3,1 nm, le pourcentage de particules de dimension $dp_m \pm \sigma$ représentant 66%, et pour le deuxième lot (figures 5 et 6), on obtient $d_{50}$=20 nm, $dp_m$=27,1 nm et $\sigma$=17,7 nm, le pourcentage de particules de dimension $dp_m \pm \sigma$ représentant 62%.

**Revendications**

1. Procédé de contrôle ou de détermination des caractéristiques d'une membrane de microfiltration ou ultrafiltration, **caractérisé en ce que** :

   a) on fait passer à travers ladite membrane au moins un lot d'une suspension aqueuse stabilisée de nanoparticules minérales magnétiques comprenant un agent stabilisant, de concentration donnée et dont :

   - la dimension des particules di est de 1 à 100 nm, et
   - la valeur $d_{50}$ est de 2 à 50 nm, la valeur $d_{50}$ étant la dimension de particules pour laquelle 50% en volume desdites particules ont une dimension inférieure ou égale à ladite valeur $d_{50}$, et
   - au moins 60% en volume desdites particules ont une dimension di comprise dans la fourchette $dp_m \pm \sigma$, $dp_m$ représentant la valeur moyenne des dimensions des particules dudit lot et $\sigma$ l'écart-type, avec :

   ■

   $$dp_m = \Sigma\ Ni\ di\ /\ \Sigma\ Ni,$$

   ■

   $$\sigma = (\Sigma\ Ni\ (di\text{-}dp_m)^2\ /\ \Sigma\ Ni)^{1/2},$$

   ■ Ni= volume de particules de dimension di,

   b) on mesure la concentration desdites particules du ou desdits lots par mesure de la susceptibilité magnétique au moins en aval de ladite membrane.

2. Procédé selon la revendication 1, **caractérisé en ce que** l'on met en oeuvre des lots de suspension de particules de maghémite.

3. Procédé selon la revendication 1 ou 2, **caractérisé en ce que** l'on mesure la concentration desdites particules du ou desdits lots en aval et en amont de ladite membrane.

4. Procédé selon l'une des revendications 1 à 3, **caractérisé en ce que** la concentration en dites particules dans ces suspensions est de 0,1 à 10g/l.

5. Procédé selon l'une des revendications 1 à 4, **caractérisé en ce qu'**une mesure des dites concentrations en aval et en amont de la membrane sont prises en compte après au moins 3 mesures identiques successives de préférence espacées d'au moins 10 minutes de flux de perméat.

6. Procédé selon l'une des revendications 1 à 5, **caractérisé en ce que**, avant d'effectuer une nouvelle mesure de concentration en aval de la membrane, on envoie une solution de solvant à travers ladite membrane et on effectue une mesure de la perméabilité de la membrane.

7. Procédé selon l'une des revendications 1 à 6, **caractérisé en ce que** ladite suspension de particules est envoyée à travers la membrane, poussée par un gaz, de préférence de l'azote ou de l'air, sans utiliser de pompe, et, de préférence, lesdits perméats et rétentats de suspension de particules ne sont pas recyclés au cours des différentes mesures sur un même lot.

**8.** Procédé selon l'une des revendications 1 à 6, **caractérisé en ce que** lesdites suspensions de particules sont mises en circulation par une ou des pompes et lesdits perméats et rétentats de suspensions de particules sont recyclés au cours des différentes mesures sur un même lot.

**9.** Procédé selon l'une des revendications 1 à 8, **caractérisé en ce que** la vitesse de circulation desdites suspension de particules est telle que le flux de perméat de suspension de particules est compris entre la valeur du flux de perméat mesuré avec le solvant aqueux seul, et 70% de cette valeur.

**10.** Procédé selon l'une des revendications 1 à 9, **caractérisé en ce que** l'on effectue une filtration membranaire en mode tangentiel.

**11.** Procédé selon l'une des revendications 1 à 10, **caractérisé en ce que** l'on détermine le seuil de coupure d'une dite membrane, en effectuant une série de mesures de concentrations des dites suspensions en aval et en amont de la membrane, à température, pression transmembranaire et vitesse de circulation constantes, sur des lots de suspension de dites particules de différentes valeurs de $d_{50}$, de préférence de valeurs de $d_{50}$ régulièrement espacés entre $1/2 \times n$ et $10 \times n$, n étant la dimension moyenne estimée des pores de la membrane, et on établit une courbe du taux de rétention $R = 1-Cp/Ca$ en fonction dedites valeurs de $d_{50}$, avec Cp = concentration du perméat en aval de la membrane et Ca = concentration initiale de dites particules en amont de la membrane.

**12.** Procédé selon la revendication 11, **caractérisé en ce que** le calibre des particules des différents lots de suspension de dites particules doit permettre d'obtenir au moins 5 couples de points ($d_{50}$/taux de rétention) dans une plage de taux de rétention de 60 à 95%, et de préférence on détermine le seuil de coupure de ladite membrane comme étant la valeur du $d_{50}$ dudit lot de suspension de dites particules correspondant à R = 0,9.

**13.** Procédé selon l'une des revendications 1 à 10, **caractérisé en ce qu'**on détecte une fuite ou un défaut de fonctionnement d'une membrane de filtration membranaire, en faisant passer à travers ladite membrane au moins un lot de suspensions de dites particules de dite dimension calibrée, dont ledit $d_{50}$ est supérieur au seuil de coupure de ladite membrane, ledit seuil de coupure étant, de préférence, déterminé précédemment par une méthode de détermination selon l'une des revendications 12 à 13, et on mesure la concentration desdites particules du ou desdits lots en aval de ladite membrane.

**14.** Procédé selon l'une des revendications 1 à 13, **caractérisé en ce que** lesdites particules sont des particules de maghémite de 1 à 100 nm, lesdits lots de particules présentent des valeurs de $d_{50}$ de 5 à 25 nm et la concentration en maghémite dans lesdites suspensions de particules est de 0,1 à 10 g/l.

**Claims**

**1.** A method of checking or determining the characteristics of a microfiltration or ultrafiltration membrane, **characterized in that**:

a) through said membrane is passed at least one lot of a stabilized aqueous suspension of magnetic mineral nanoparticles including a stabilizer, of given concentration and wherein:

- the particles size di is from 1 to 100 nm, and
- the $d_{50}$ value is from 2 to 50 nm, the $d_{50}$ value being the particles size for which 50% by volume of said particles have a size less than or equal to said $d_{50}$ value, and
- at least 60% by volume of said particles have a size di comprised in the range $dp_m \pm \sigma$, $dp_m$ representing the mean value of the particles sizes of said lot and $\sigma$ representing the standard deviation, with:

■

$$dp_m = \Sigma\ Ni\ di\ /\ \Sigma\ Ni,$$

■

$$\sigma = (\Sigma \ Ni \ (di-dp_m)^2 \ / \ \Sigma \ Ni)^{\frac{1}{2}},$$

■ Ni = volume of particles of size di,

b) the concentration of said particles of said lots is determined by measuring magnetic susceptibility at least downstream from said membrane.

2. The method according to claim 1, **characterized in that** maghemite particles suspension lots are used.

3. The method according to claim 1 or 2, **characterized in that** the concentration of said particles of said lots is measured downstream and upstream from said membrane.

4. The method according to one of claims 1 to 3, **characterized in that** the concentration of said particles in these suspensions is from 0.1 to 10 g/l.

5. The method according to one of claims 1 to 4, **characterized in that** a measurement of said concentrations downstream and upstream from the membrane is taken into account after at least 3 successive identical measurements preferably spaced by at least 10 minutes of permeate flow.

6. The method according to one of claims 1 to 5, **characterized in that**, before taking a new concentration measurement downstream from the membrane, a solvent solution is sent through said membrane and the permeability of the membrane is measured.

7. The method according to one of claims 1 to 6, **characterized in that** said suspension of particles is sent through the membrane, pushed by a gas, preferably nitrogen or air, without use of a pump, and, preferably, said particle suspension permeates and retentates are not recycled during the various measurements on a given lot.

8. The method according to one of claims 1 to 6, **characterized in that** said suspensions of particles are circulated by one or several pumps and said particle suspension permeates and retentates are recycled during the various measurements on a given lot.

9. The method according to one of claims 1 to 8, **characterized in that** the circulation rate of said suspension of particles is such that the particle suspension permeate flow is between the value of the permeate flow measured with aqueous solvent alone, and 70% of this value.

10. The method according to one of claims 1 to 9, **characterized in that** tangential flow membrane filtration is performed.

11. The method according to one of claims 1 to 10, **characterized in that** the cut-off of said membrane is determined by carrying out a series of measurements of the concentrations of said suspensions downstream and upstream from the membrane, at constant temperature, transmembrane pressure and circulation rate, on lots of suspensions of said particles of various $d_{50}$ values, preferably $d_{50}$ values regularly spaced between $\frac{1}{2} \times n$ and $10 \times n$, n being the estimated mean membrane pore size, and a curve is plotted for the retention rate R = 1-Cp/Ca as a function of said $d_{50}$ values, with Cp = permeate concentration downstream from the membrane and Ca = initial concentration of said particles upstream from the membrane.

12. The method according to claim 11, **characterized in that** the caliber of the various lots of suspension of said particles must make it possible to obtain at least 5 pairs of points ($d_{50}$/retention rate) in a retention rate range of 60% to 95%, and preferably the cut-off of said membrane is determined as being the $d_{50}$ value of said lot of suspension of said particles corresponding to R = 0.9.

13. The method according to one of claims 1 to 10, **characterized in that** a leak or malfunction in a filtration membrane is detected by passing through said membrane at least one lot of suspension of said particles of said calibrated size, wherein said $d_{50}$ is greater than the cut-off of said membrane, said cut-off being, preferably, determined beforehand by the determination method according to one of claims 12 to 13, and the concentration of said particles of said lots is measured downstream from said membrane.

**14.** The method according to one of claims 1 to 13, **characterized in that** said particles are maghemite particles from 1 to 100 nm in size, said lots of particles having $d_{50}$ values from 5 to 25 nm and the maghemite concentration in said suspensions of particles is from 0.1 to 10 g/l.

**Patentansprüche**

**1.** Verfahren zur Kontrolle oder zur Bestimmung der Charakteristika einer Mikrofiltrations- oder Ultrafiltrationsmembran, **dadurch gekennzeichnet, daß**:

a) man durch die Membran wenigstens eine Menge einer stabilisierten wäßrigen Suspension aus mineralischen magnetischen Nanopartikeln, umfassend ein Stabilisierungsmittel, mit gegebener Konzentration passieren läßt, deren:

- Partikelabmessung di 1 bis 100 nm beträgt und
- deren Wert $d_{50}$ 2 bis 50 nm beträgt, wobei der Wert $d_{50}$ die Partikelabmessung ist, bei der 50 Vol.-% der Partikel eine Abmessung kleiner als der oder gleich dem Wert $d_{50}$ aufweisen, und
- wenigstens 60 Vol-% der Partikel eine Abmessung di innerhalb des Bereichs $dp_m \pm \sigma$ haben, wobei $dp_m$ den Mittelwert der Abmessungen der Partikel der Menge und $\sigma$ die Standardabweichung darstellt, mit:

•

$$dp_m = \Sigma\ Ni\ di\ /\ \Sigma\ Ni,$$

•

$$\sigma = (\Sigma\ Ni\ (di\text{-}dp_m)^2\ /\ \Sigma\ Ni)^{1/2},$$

• Ni = Volumen von Partikeln mit der Abmessung di,

b) die Konzentration der Partikel der Menge oder Mengen durch Messen der magnetischen Suszeptibilität wenigstens stromabwärts der Membran gemessen wird.

**2.** Verfahren nach Anspruch 1, **dadurch gekennzeichnet, daß** Mengen von einer Suspension aus Maghemit-Partikeln verwendet werden.

**3.** Verfahren nach Anspruch 1 oder 2, **dadurch gekennzeichnet, daß** die Konzentration der Teilchen der Menge oder Mengen stromabwärts und stromaufwärts der Membran gemessen wird.

**4.** Verfahren nach einem der Ansprüche 1 bis 3, **dadurch gekennzeichnet, daß** die Konzentration an Partikeln in diesen Suspensionen 0,1 bis 10 g/l beträgt.

**5.** Verfahren nach einem der Ansprüche 1 bis 4, **dadurch gekennzeichnet, daß** nach wenigstens 3 aufeinanderfolgenden identischen, vorzugsweise um wenigstens 10 Minuten voneinander beabstandeten Messungen des Permeatstroms eine Messung der Konzentrationen stromabwärts und stromaufwärts der Membran berücksichtigt wird.

**6.** Verfahren nach einem der Ansprüche 1 bis 5, **dadurch gekennzeichnet, daß** vor Durchführen einer neuen Konzentrationsmessung stromabwärts der Membran eine Lösungsmittellösung durch die Membran geleitet wird und eine Messung der Permeabilität der Membran durchgeführt wird.

**7.** Verfahren nach einem der Ansprüche 1 bis 6, **dadurch gekennzeichnet, daß** die Partikelsuspension, durch ein Gas, vorzugsweise Stickstoff oder Luft getrieben, ohne Verwendung einer Pumpe durch die Membran geleitet wird und vorzugsweise die Permeate und Retentate der Partikelsuspension im Laufe der verschiedenen Messungen an einer gleichen Menge nicht zurückgeführt werden.

8. Verfahren nach einem der Ansprüche 1 bis 6, **dadurch gekennzeichnet, daß** die Partikelsuspensionen durch eine Pumpe oder Pumpen in Zirkulation versetzt werden und die Permeate und Retentate der Partikelsuspensionen im Laufe der verschiedenen Messungen an einer gleichen Menge zurückgeführt werden.

9. Verfahren nach einem der Ansprüche 1 bis 8, **dadurch gekennzeichnet, daß** die Zirkulationsgeschwindigkeit der Partikelsuspensionen derart ist, daß der Permeatstrom der Partikelsuspension zwischen dem Wert des Permeatstroms, der lediglich mit dem wäßrigen Lösungsmittel gemessen wird, und 70 % dieses Wertes liegt.

10. Verfahren nach einem der Ansprüche 1 bis 9, **dadurch gekennzeichnet, daß** eine Membranfiltration im Tangentialbetrieb durchgeführt wird.

11. Verfahren nach einem der Ansprüche 1 bis 10, **dadurch gekennzeichnet, daß** die Trenngrenze einer Membran dadurch bestimmt wird, daß eine Reihe von Konzentrationsmessungen der Suspensionen stromabwärts und stromaufwärts der Membran bei konstanter Temperatur, konstantem transmembranen Druck und konstanter Zirkulationsgeschwindigkeit, an Mengen einer Suspension aus Partikeln mit unterschiedlichen Werten von $d_{50}$, vorzugsweise mit gleichmäßig beabstandeten Werten von $d_{50}$ zwischen 1/2 x n und 10 x n durchgeführt wird, wobei n die geschätzte durchschnittliche Abmessung der Poren der Membran ist, und eine Kurve des Rückhaltegrades R = 1-Cp/Ca in Abhängigkeit der Werte von $d_{50}$, mit Cp = Konzentration des Permeats stromabwärts der Membran und Ca = Ausgangspartikelkonzentration stromaufwärts der Membran, erstellt wird.

12. Verfahren nach Anspruch 11, **dadurch gekennzeichnet, daß** das Maß der Partikel der verschiedenen Partikelsuspensionsmengen ermöglichen muß, wenigstens 5 Punktepaare ($d_{50}$/Rückhaltegrad) in einem Rückhaltegradbereich von 60 bis 95 % zu erhalten, und vorzugsweise die Trenngrenze der Membran als der Wert von $d_{50}$ der Partikelsuspensionsmenge, entsprechend R = 0,9 bestimmt wird.

13. Verfahren nach einem der Ansprüche 1 bis 10, **dadurch gekennzeichnet, daß** ein Leck oder eine Funktionsstörung einer Membran zur Membranfiltration dadurch detektiert wird, daß man durch die Membran wenigstens eine Menge von Suspensionen aus Partikeln mit kalibrierter Abmessung passieren läßt, deren $d_{50}$ über der Trenngrenze der Membran liegt, wobei die Trenngrenze vorzugsweise zuvor mittels eines Bestimmungsverfahrens nach einem der Ansprüche 12 bis 13 bestimmt wird, und die Konzentration der Partikel der Menge oder Mengen stromabwärts der Membran gemessen wird.

14. Verfahren nach einem der Ansprüche 1 bis 13, **dadurch gekennzeichnet, daß** die Partikel Maghemit-Partikel mit 1 bis 100 nm sind, wobei die Mengen von Partikeln Werte von $d_{50}$ zwischen 5 und 25 nm aufweisen und die Maghemit-Konzentration in den Partikelsuspensionen 0,1 bis 10 g/l beträgt.

FIG.1

FIG.2

FIG.3

FIG.4

FIG.5

FIG.6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **JOLIVET et al.** *C.R. Chimie,* 2002, vol. 5, 659-664
- **FAUCONNIER et al.** *J. of Colloid and interface science,* 1997, vol. 194, 427-433
- **VAYSSIERE et al.** *J. Colloïd Interface SCI,* 1998, vol. 205, 205-212